Europäisches Patentamt

European Patent Office

Office européen des brevets

(19)

(11) Publication number: **0 048 161**
**A1**

## (12) EUROPEAN PATENT APPLICATION

(21) Application number: **81304221.5**

(22) Date of filing: **15.09.81**

(51) Int. Cl.³: **G 11 B 3/08**

(30) Priority: **15.09.80 US 187108**

(43) Date of publication of application:
**24.03.82 Bulletin 82/12**

(84) Designated Contracting States:
**DE FR GB IT**

(71) Applicant: **MATTEL, INC.**
**5150 Rosecrans Avenue**
**Hawthorne California 90250(US)**

(72) Inventor: **Klose, George Jerzy**
**25205, Cypress Avenue Apt. 3**
**Lomita California 90717(US)**

(74) Representative: **White, Martin David et al,**
**Marks & Clerk 57/60 Lincoln's Inn Fields**
**London WC2A 3LS(GB)**

(54) **Phonograph.**

(57) Circumferentially spaced lead-in grooves are identified by gaps (between teeth 92, 93) in an optical disc (90) read by an optical encoder (94) which sends electric signals to a microprocessor (100) from which predetermined lead-in grooves are selected by a keyboard (106); the microprocessor impulses a solenoid which moves a stylus (32) into engagement with the lead-in grooves selected by the keyboard.

Fig.1

EP 0 048 161 A1

Croydon Printing Company Ltd.

## "PHONOGRAPH"

This invention relates to a phonograph of a type comprising a
record having a plurality of recorded grooves, a respective lead-in
groove for each recorded groove and at least one run-out groove
provided thereon, a tone arm rotatably mounted adjacent the record
and a stylus depending from the free end of the tone arm for
tracking the grooves.

Such phonographs provide a plurality of alternative recordings
on the same side of a record, so that the said side of the record
can be played more than once and produce a different output each
time, depending on the actual number of recorded grooves.

Prior art publications include United States Patent Specification
("USPS") No. 3 740 055 and USPS No. 4 135 086.

USPS No. 4 135 086 discloses an automatic record player of a
type which employs a linear-tracking pickup arm.  The position
of the pickup arm is opto-electrically detected by the use of
a multi-window scale and a photo-coupler unit.  Pre-assigned
position signals, which are stored in a memory, are compared
with the detected position signal to control the movement of
the pickup arm.

USPS No. 3 740 055 discloses a record player including a record
having a plurality of interleaved, spiral grooves each corresponding to items of information on a selection chart. An array of switches corresponding to individual items on the display and a position selector switch assembly operated by the position of the record relative to a tone arm cooperate to position the stylus of the tone arm in a spiral groove corresponding to the selected portion of the display.

It is an object of the present invention to provide a new and useful computerized phonograph, that is, record player.

It is another object of the present invention to provide a computerized record player which will automatically play an appropriate message in response to the actuation of predetermined keys on a keyboard.

According to the present invention, a phonograph including a record having a plurality of recorded grooves, a respective lead-in groove for each recorded groove and at least one run-out groove provided thereon and a stylus for tracking the groove is provided with an encoder for generating electric signals corresponding to the location of each lead-in groove, a micro-processor connected to the encoder for processing electric signals received therefrom, a keyboard or the like connected to the microprocessor for selecting predetermined lead-in grooves and a solenoid or the like connected to the microprocessor for converting processed signals into movement of the stylus into engagement with lead-in grooves selected by the keyboard only at an appropriate time as indicated by the encoder.

In a preferred embodiment of the invention, the record player is controlled by a National Semiconductor brand COP 400 series microprocessor. The motor in the record player is switched by the microprocessor by means of a transistor. To ensure that the motor runs at the proper speed, a voltage regulating circuit supplies approximately 1.45 volts to the motor. Power to the regulator is supplied from a three volt·source. The stylus-position solenoid is also switched by means of a transistor, and it is also powered from the three volt supply.

The encoder may be an optical encoder and may include an infra-red LED and a phototransistor reading gaps on an optical track with a double gap being used as a reference gap.

In the best mode presently contemplated for carrying out the invention, the keyboard comprises switches. All except one of these switches are read by the microprocessor by means of a conventional switch matrix. The remaining switch functions not only as an input switch but also activates the microprocessor's power switching circuit. Once the processor senses that power is up, it latches the power switching circuit on.

The computerized record player of the present invention also includes:

a tonearm assembly having a tail piece, a pair of tonearms formed integrally with the tail piece, and two styli or needles depending one from each of the free ends of the tonearms. The distance between the needles is such that one needle may engage the run-out groove while the other needle is positioned adjacent one of the lead-in grooves at the periphery of the record.

A speaker cone is coupled to the tonearm assembly for receiving vibrations therefrom and a tone-arm-lifting finger is also coupled to the tailpiece. This tone-arm-lifting finger has a first position wherein one of the needles is lifted above the record and a second position wherein the other needle is lifted above the record. A solenoid is mounted in the record player adjacent the finger and includes a fixed armature having first and second ends defining the first and second positions of the fingers. Permanent magnets are connected to the ends of the armature in the path-of-travel of the finger, so that one of the magnets may be energized by the coil to draw the finger into engagement with said one magnet for establishing one of said positions for said finger and the other magnet may be energized by a reversal of current in said coil to draw said finger into engagement with said other magnet for establishing the other of said positions for said finger.

The record player may provide messages in indirect response to the actuation of keys on the keyboard or even without such an activation and thus simulate two-sided conversation with the user. For example, as soon as the record player is energized, it may say, "Good day, let's play a game". If no further input is received within 15 seconds, the record player might say, "Please press a key to select a game". Then if no input is received within 15 seconds, the message may say, "Since nobody wants to play, goodbye". The unit will then shut itself off. Thus, the device is capable of playing messages in response to a lack of a keyboard actuation.

The record player may say, "Spell cat; C - A - T". If keys are pressed in proper sequence, the message is: "Very well, now spell...". If either the letters or the sequence is wrong, the message is: "NO! That is not right. Try again."

The features of the present invention which are believed to be novel are set forth with particularity in the appended claims.

The present invention, both as to its organization and operation, together with further objects and advantages thereof, may best be understood by reference to the following description, taken in connection with the accompanying drawings in which like reference characters refer to like elements in the several views.

Figure 1 is an exploded, perspective view of a computerized record player constituting a presently-preferred embodiment of the invention in combination with the switches, wiring and microprocessor for the record player, which are shown schematically;

Figure 2 is an enlarged top plan view of the record player of Figure 1 with parts broken away to show internal construction;

Figure 3 is a cross-sectional view taken along line 3-3 of Figure 2;

Figure 4 is a side-elevational view taken along line 4-4 of Figure 2; and

Figure 5 is a wiring diagram of the computerized control for the record player of Figure 1.

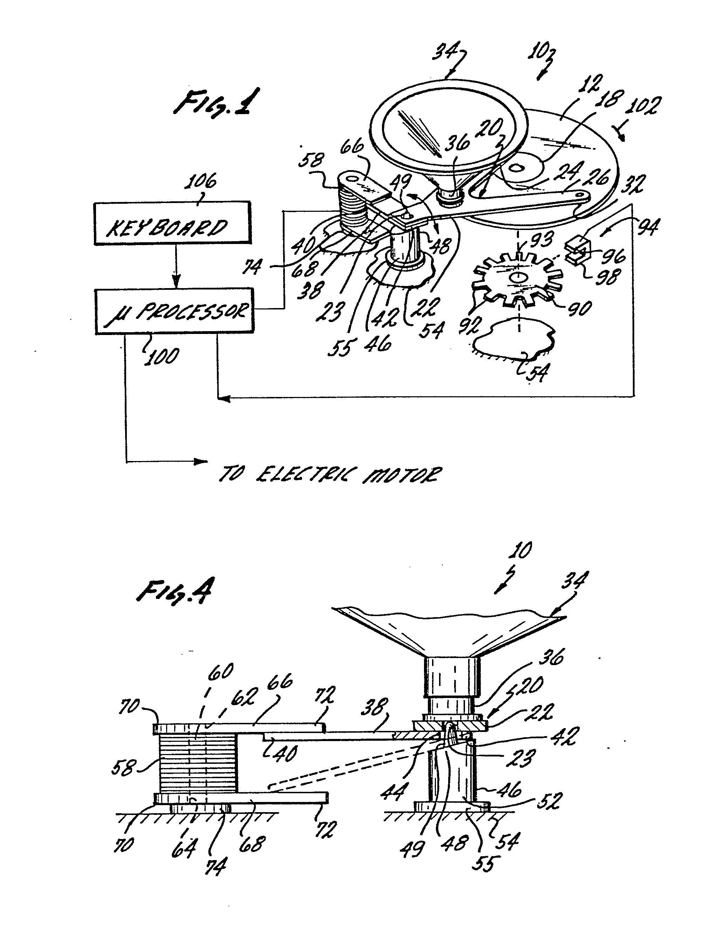

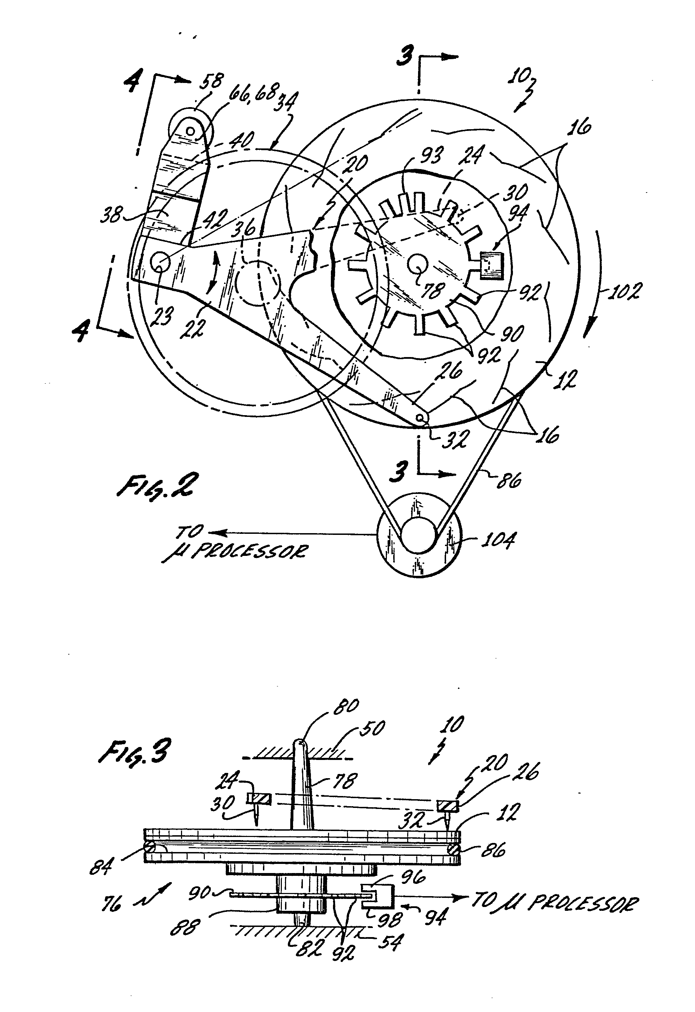

A computerized record player constituting a presently-preferred embodiment of the invention, generally designated 10, includes a disc-type phonograph record 12 having a plurality of recorded grooves 14 (Figure 2), a respective lead-in groove 16 for each recorded groove and a common run-out groove 18 (Figure 1). As shown herein for purposes of illustration, but not of limitation, twelve recorded grooves are provided and they may contain suitable recorded information, such as recorded messages or short sayings. Twelve lead-in grooves 16 are also provided and they are uniformly spaced about the periphery of record 12.

Record player 10 also includes a dual tone arm assembly 20 which may be of Y-shaped design including a tailpiece 22, which is provided with an aperture 23, a pair of tonearms 24, 26 and a pair of phonograph styli in the form of needles 30, 32 depending from the free ends of tonearms 24, 26, respectively. The distance between needles 30, 32 is such that one needle will be positioned over run-out groove 18 when the other needle is positioned over a lead-in groove 16 at the periphery of record 12. A speaker cone 34 may be affixed to tonearm assembly 20 by a cylindrical coupling member 36 engaging speaker cone 34 at its apex.

Needles 30, 32 may be lifted from record 12 by a magnetic tone-arm-lifting finger 38 having a north end 40 and a south end 42, which is provided with an aperture 44.

Tonearm assembly 20, which may be made from a suitable dielectric material, and finger 38, which may be made from a suitable magnetizable material, are swingably mounted in record player 10 on a suitable post 46 having an upper end 48 to which an upstanding pivot pin 49 is affixed for connecting post 46 to upper housing wall 50 and for receiving aperture 44 of finger 38 and aperture 23 of tonearm assembly 20. Post 46 also includes a lower end 52 which may be affixed to a lower housing wall 54 in record player 10 by a spacer 55.

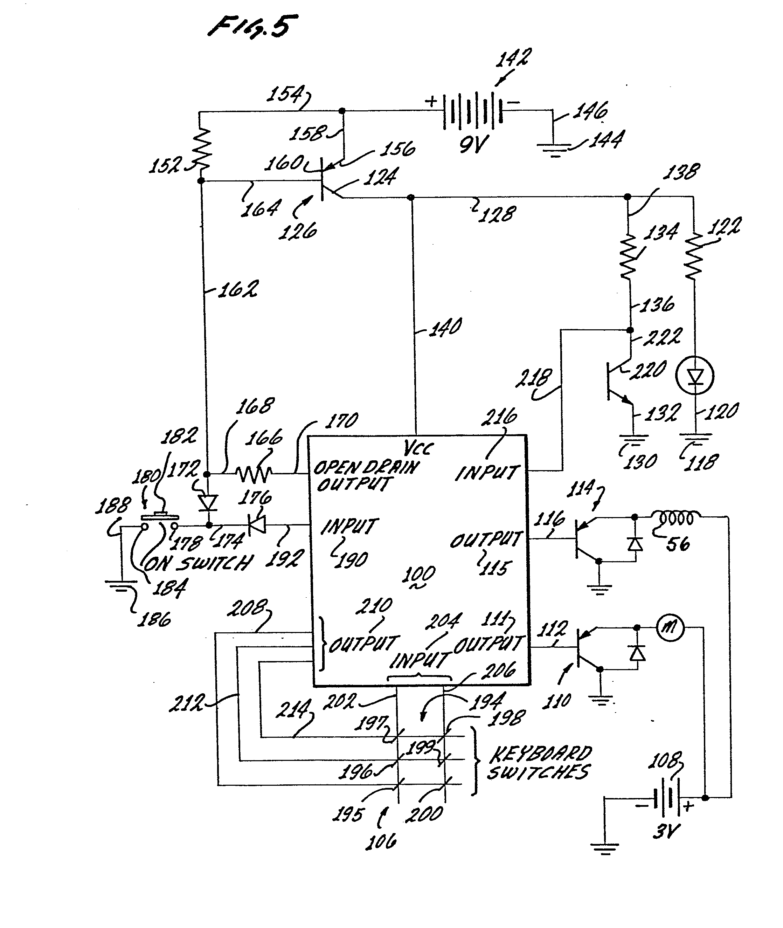

Record player 10 also includes a solenoid 56 having a coil 58 and a fixed armature 60 which, in turn, has a first end 62 and a second end 64. A first pole piece 66 has its first end 70 affixed to the first end 62 of armature 60 and its second end 72 extending over finger 38 for holding finger 38 in an elevated position to maintain needle 32 in engagement with record 12. A second pole piece 68 has its first end 70 affixed to the second end 64 of armature 60 and its second end 72 extending under finger 38 for maintaining finger 38 in the broken-line position shown in Figure 4 to hold needle 30 in engagement with record 12.
It will be apparent to those skilled in the art that finger 38
may be moved from its Figure 4 solid-line position to its broken-line
position by reversing the current to coil 58. The assembly comprising
solenoid 56 and pole pieces 66, 68 may be affixed to housing
wall 54 by a suitable dielectric spacer 74.

Referring now to Figure 3, record player 10 also includes a turntable
76 carried by a spindle 78 having its upper end 80 rotatably
mounted in upper housing wall 50 and its lower end 82 rotatably
mounted in lower housing wall 54. Turntable 76 carries record
12 and may be provided with a belt groove 84 adapted to receive
a belt 86 for rotating turntable 76. Spindle 78 includes an
increased-diameter portion 88 at its lower end which carries
an optical disc 90 having a plurality of teeth 92 corresponding
in number and location to the lead-in grooves 16 on record 12.
Disc 90 also includes a reference tooth 93 (Figures 1 and 2)
which is positioned between two teeth 92 for establishing a point
of reference with respect to the rotated position of record 12.
Teeth 92 and tooth 93 are read by an optical encoder 94 including
an infra-red LED 96 and a phototransistor 98 which is connected
to a microprocessor 100 (Figure 1). As shown in Figure 2, record
12 is driven in the direction of arrow 102 by an electric motor
104 which is also connected (via pnp transistor 110, Figure 5,
omitted from Fig. 1) to microprocessor 100, which may be a National
Semiconductor COP 400 series microprocessor to which a keyboard
106 is connected for selecting predetermined lead-in grooves 16 on record 12.


Referring now to Figure 5, solenoid 56 and motor 104 receive
power from a three-volt battery 108. Motor 104 is switched by
microprocessor 100 by means of the pnp transistor 110 which has
its base connected to output 111 on microprocessor 100 by a lead
112. Solenoid 56, which is also powered from battery 108, is
switched by a pnp transistor 114 (also omitted from Fig. 1) connected
to microprocessor 100 by a lead 116.


Infra-red LED 96 is connected to a ground 118 by a lead 120 and
to a resistor 122 by a lead 123. Resistor 122 is connected to
the collector 124 in a pnp transistor 126 by a conductor 128.


Phototransistor 98 is connected to a ground 130 by a lead 132
and to a resistor 134 by a lead 136. Resistor 134 is connected
to conductor 128 by a lead 138. Conductor 128 is connected to
the Vcc on microprocessor 100 by a lead 140.


A 9 volt battery 142 is connected to a ground 144 by a lead 146
and to a resistor 152 by a conductor 54. The emitter 156 on
transistor 126 is connected to conductor 154 by a lead 158 and
the base 160 in transistor 126 is connected to a conductor 162
below resistor 152 by a lead 164. A resistor 166 is connected
to conductor 162 by a lead 168 and to the open-drain output in
microprocessor 100 by a lead 170. A diode 172 connects conductor
162 to a lead 174 having one end connected to a diode 176 and its other end connected to a pole 178 on a normally-open switch 180 which includes a pushbutton 182 and a second pole 184. Pole 184 is connected to a ground 186 by a lead 188. Diode 176 is connected to an input 190 in microprocessor 100 by a lead 192.

Keyboard 106 includes a switch matrix 194 having switches 195, 196, 197, 198, 199 and 200. A lead 202 connects switches 195, 196 and 197 to an input 204 in microprocessor 100 and a lead 206 connects switches 198, 199 and 200 to input 204. A conductor 208 connects an output 210 in microprocessor 100 to switches 195 and 200; a conductor 212 connects output 210 to switches 196 and 199 and a conductor 214 connects output 210 to switches 197 and 198. Lead 136 is connected to an input 216 by a lead 218 and to a collector 220 in phototransistor 98 by a lead 222.

It is apparent from the foregoing that power to the optical encoder 94 is taken from Vcc at microprocessor 100.

Operation of the computerized record player is believed to be apparent from the foregoing and will be briefly summarized at this point.

Switch 180 may be momentarily closed to activate the power switching circuit in microprocessor 100. Once the microprocessor senses that power is up, it latches the power switching circuit on. Assuming that tone-arm-lifting finger 38 is in the broken-line position shown in Figure 4 so that needle 30 will be riding in the silent run-out groove, one of the buttons may be depressed
on keyboard 106 switching motor 104 on.  A delay of 255 ms is
executed while motor 104 comes up to speed.  Optical encoder
94 then starts generating electric signals corresponding to the
location of each lead-in groove 16.  The input from phototransistor
98 is then continuously read (and debounced with an 18 ms time
constant) until a gap is detected.  When a gap is detected, a
10 ms delay is executed.  If another gap is read at this point,
it means that the double gap at reference 93 has been detected.
Then all succeeding gaps are counted as valid track indices.
As each single gap is detected, a 10 ms delay is executed to
prevent the same gap from being read twice.

When the number of gaps read equals the requested track numbers,
solenoid 56 is enabled for 20 ms causing pole 68 to recoil magnet
38 into holding engagement with pole 66.  This lowers needle
32 into the selected lead-in groove 16, as shown in Figure 3.
After solenoid 56 is deactivated, pole 66 continues holding magnet
38 and needle 32 tracks the selected recording inwardly to run-out
groove 18.  Motor 104 is then deactivated and control is returned
to the main program in microprocessor 100.

While the particular computerized record player herein shown
and described in detail is fully capable of attaining the objects
and providing the advantages hereinbefore stated, it is to be
understood that it is merely illustrative of the presently-preferred
embodiment of the invention and that no limitations are intended to the details of construction or design herein shown other than as defined in the appended claims which form a part of this disclosure.

Whenever the term "means" is employed in these claims, this term is to be interpreted as defining the corresponding structure illustrated and described in this Specification or the equivalent of the same.

Claims:-

1.    A computerized phonograph (10) comprising a record (12) having a plurality of recorded grooves (14), a respective lead-in groove (16) for each recorded groove (14) and at least one run-out groove (18) provided thereon, tone arm means (20) movably mounted adjacent said record (12), a stylus (30) depending from a free end of said tone arm means (20) for tracking said grooves (14, 16, 18), a speaker cone (34) coupled to said tone arm means (20) for receiving vibrations therefrom, first means (90, 94) coupled to said record (12) for generating electric signals corresponding to the location of each lead-in groove (16), and second means (56) coupled to said tone arm means (20) for moving said stylus (30) into engagement with preselected lead-in grooves (16), characterized by; third means (106) for selecting predetermined lead-in grooves (16) and generating a corresponding digital code; fourth means coupled to said third means (106) and including a microprocesser (100) for processing said digital code and for producing an output signal, and fifth means (114) connected to said second means (56) and to said fourth means (100) for converting said output signal into movement of said stylus (30) into engagement with said preselected lead-in grooves (16).

2.    A phonograph as recited in Claim 1 wherein said first means (90, 94) comprises an optical encoder (94).

3.    A phonograph as recited in Claim 1 wherein said second means (56) comprises a solenoid (56).

4.    A computerized phonograph as recited in Claim 1 wherein said tone arm means (20) includes a tail piece (22), a pair of tonearms (24, 26) formed integrally with said tail piece (22), each of said tonearms (24, 26) having a free end extending over said record (12), a respective stylus (30, 32) depending from each of said free ends, the distance between said styli (30, 32) being such that one stylus may engage said run-out groove (18) while the other stylus is positioned adjacent one of said lead-in grooves (16) at the periphery of said record 12).

5.    A phonograph as recited in Claim 4 further characterized by a tone-arm-lifting finger (38) coupled to said tailpiece (22), said tone-arm-lifting finger (38) having a first position wherein one of said styli (30, 32) is lifted above said record (12) and a second position wherein the other of said styli (30, 32) is lifted above said record (12); said second means (56) comprising a solenoid (56) mounted adjacent said finger (38), said solenoid (56) including a coil (58) and a fixed armature (60) having first and second ends (62, 64) defining said first and second positions of said finger (38).

6.    A phonograph as recited in Claim 5 further characterized by first and second pole pieces (66, 68) connected to said first and second ends (62, 64) of said armature (60) in the path-of-travel of said finger (38), whereby one of said pole pieces (66) may
be caused by said coil (58) to draw said finger (38) into engagement
with said one pole piece (66) for establishing one of said positions
for said finger (38) and the other of said pole pieces (68) may
be caused by a reversal of current in said coil (58) to draw
said finger (38) into engagement with said other pole piece (68)
for establishing the other of said positions for said finger
(38).

Fig.1

KEYBOARD

μ PROCESSOR

TO ELECTRIC MOTOR

Fig.4

Fig.2

TO
µ PROCESSOR

Fig.3

TO µ PROCESSOR

FIG.5

# EUROPEAN SEARCH REPORT

**European Patent Office**

Application number

EP 81 30 4221.5

## DOCUMENTS CONSIDERED TO BE RELEVANT

| Category | Citation of document with indication, where appropriate, of relevant passages | Relevant to claim |
|---|---|---|
| | DE - A1 - 2 843 555 (SHARP K.K.)<br>* claim 1; page 6, line 18 to page 7, line 18; page 12, lines 6 to 15 *<br>& US - A - 4 230 323<br>--- | 1,2 |
| | DE - B2 - 2 141 900 (ONKYO K.K.)<br>* column 4, lines 26 to 29; fig. 2 *<br>& GB - A - 1 371 197<br>--- | 2 |
| D | US - A - 3 740 055 (D.J. BENDANIEL et al.)<br>* claims 1, 2; column 5, lines 8 to 25 *<br>--- | 3 |
| | US - A - 1 611 257 (L. TRUDEAU et al.)<br>* page 2, lines 1 to 7; fig. 1 *<br>--- | 4 |
| A | US - A - 3 647 223 (D.J. BENDANIEL et al.)<br>* abstract *<br>----- | |

**CLASSIFICATION OF THE APPLICATION (Int. Cl.³)**

G 11 B 3/08

**TECHNICAL FIELDS SEARCHED (Int. Cl.³)**

G 11 B 3/00

G 11 B 17/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 09-12-1981 | LEITHÄUSER |

EPO Form 1503.1 06.78